# EUROPEAN PATENT SPECIFICATION

(11) **EP 1 013 055 B1**
(45) Date of publication and mention of the grant of the patent: **27.04.2005**
(21) Application number: 98942858.6
(22) Date of filing: 09.09.1998
(51) Int. Cl.: H04M 1/72, H04M 1/66, H04M 1/274

(54) **EMERGENCY MOBILE RADIO TELEPHONE WITH REDUCED KEY SET**
MOBILES NOTRUFTELEFON MIT VERRINGERTEM TASTENSATZ
RADIOTELEPHONE MOBILE D'URGENCE A COMMUNICATIONS RESTREINTES

(30) Priority: 09.09.1997 FI 973637
(43) Date of publication of application: 28.06.2000
(73) Proprietor: Wesby, Philip Bernard, 02630 Espoo (FI); Wesby Van Swaay, Eveline, 02630 Espoo (FI); Parkkali, Rauli, 00250 Helsinki (FI); Ahnlund, Hans Kjell Olof, 00100 Helsinki (FI)
(72) Inventor: Wesby, Philip Bernard, 02630 Espoo (FI); Wesby Van Swaay, Eveline, 02630 Espoo (FI); Parkkali, Rauli, 00250 Helsinki (FI); Ahnlund, Hans Kjell Olof, 00100 Helsinki (FI)
(74) Representative: Robson, Aidan John
(86) International application number: PCT/GB1998/002715
(87) International publication number: WO 1999/013629

(56) References cited:
- EP-A- 0 432 746
- EP-A- 0 524 652
- EP-A- 0 772 336
- WO-A-98/51059
- DE-A- 19 625 581
- PATENT ABSTRACTS OF JAPAN vol. 097, no. 007, 31 July 1997 & JP 09 064950 A (HITACHI LTD), 7 March 1997

## Description

### BACKGROUND OF THE INVENTION

The invention relates to a portable communicating apparatus. More particularly, it relates to a portable communicating hot link apparatus which can provide a simple, efficient and effective means of communication between children and their parents, between elderly persons and caring relatives, and between mentally less-able individuals and supervising adults.

Children often disappear from view from parents causing anxiety and worry until their whereabouts is known again. Mobile telephone technology, such as GSM, DCS, and CDMA can provide an essential link between older children and their parents, but this is not the answer for younger children, elderly persons, or mentally less-able individuals. The mobile telephone is very valuable and might easily be lost or stolen from a child or from a mentally less-able individual. Similarly, elderly citizens may experience distress should they become lost in a crowd or lose sight of a supervising adult. In all these instances, children, mentally less able individuals, and elderly persons would quite likely experience difficulty in pressing the right sequence of keys on the mobile telephone, particularly if it were dark or in instances of bad weather.

Elderly persons often make appointments to meet supervising adults, such as their grown up children, but due to the fast commotion of life, they may miss the particular agreed meeting point or they may forget the time of the meeting. There is clearly a need for a communicating device which can address the communication technology requirements of this situation.

Current mobile phone technology products do not offer a very simple and cheap technology solution which addresses this essential one-to-one communication need.

In addition to these specific communication problem needs, there is a growing concern about the potentially harmful effect of electromagnetic radiation upon the developing brains of young children. Within this context, there is an opportunity to design a communication device for children which positions the radiating electromagnetic field of a communication device away from the close proximity of the brain. In this regard, parents who maintain the belief that mobile telephones present a health risk due to the radiating antenna, may rest secure in the knowledge that this risk can be significantly reduced.

Further to these limitations of existing technologies, and so far as is known, no portable communication apparatus is presently available which serves to offer a hot link communicator comprising the minimum mobile telephone functionality suited to the specific needs of this problem area.

The EP-A-0772336 document to Staeuly Alfred discloses an easy-to-handle digital portable telephone comprising a simple array of press pad to initiate a pre-programmed unique subscriber telephone number and to answer an incoming call. The device comprises a limited number of buttons, each to call only one telephone number. This portable telephone is to link exclusively a supervisor (mother) and her children. Therefore the portable telephone has stored in an internal read only memory (ROM) the ID code of authorised correspondents. All incoming telephone numbers are compared with the stored telephone numbers. These stored numbers are only changeable by removing and changing that ROM thereby rendering the said portable telephone secure.

The EP-A-0524652 document from Ransome Industries discloses a programmable dialler for a cellular telephone that comprises a plurality of telephone numbers in its memory, which it can call with a limited number of keys. Those telephone numbers are programmed by the manufacturer or by a licensed programmer and the device must be returned to the manufacturer or to the licensed programmer for it to be reprogrammed.

In both cases, the cellular telephone must be returned to a programming place in order to be reprogrammed any time when it is desired to change the authorised correspondents. The problem with those cellular apparatuses is their lack of versatility and flexibility in the programming of stored subscriber numbers allowed to communicate with them. This problem is solved in the invention by allowing a linked mobile telephone comprising the same type of identity module to reprogram said stored numbers to link the device to any fixed or mobile phone. Therefore the invention allows a much greater versatility, flexibility and ease-of-use and also renders the programmable Hot Link communicator very secure.

### OBJECTS OF THE INVENTION

Accordingly, it is an object of the present invention to provide a novel portable hot link communicating apparatus to meet the minimum specific requirements of parents wishing to have the facility of immediate communication with their children, between mentally less-able individuals and supervising adults, and between elderly persons and caring relatives.

It is a further object of the present invention to provide a novel portable hot link communicating apparatus which comprises a preprogrammed identity module comprising the number of the mobile or fixed telephone to which the hot link communicating device is linked.

It is a further object of the present invention to provide a novel portable hot link communicating apparatus which may comprise no key pad at all, other than a simple array of press pads to initiate a call or to answer an incoming call thereby minimising cost and functionality of the said communication apparatus.

It is a further object of the present invention, to provide a novel portable hot link communicating apparatus which may comprise no display thereby minimising cost and functionality of the said communication apparatus.

It is a further object of the present invention, to provide a novel portable hot link communicating apparatus which comprises a simple and effective way of attaching it to the wearer such as a wrist strap, a hip belt clip, or a neck cord. In this context, it is a further object of the invention to provide a portable hot link communicating apparatus which may function effectively while worn on the wrist such that the electromagnetic field of the radiating antenna is positioned away from the close proximity of the developing brains of young children while a call is in progress.

It is a further object of the present invention, to provide a novel portable hot link communicating apparatus which may be moulded in any of a number of bright colours and designs which are attractive to young children and which are therefore readily worn by said children.

It is a further object of the present invention, to provide a novel portable hot link communicating apparatus which makes use of state of the art battery technology such that the hot link communicating device may be powered by a light-weight, low volume rechargeable battery with sufficient power to remain active for 24 hours.

Other objects and advantages of this invention will become apparent from the description to follow when read in conjunction with the accompanying drawings.

### BRIEF SUMMARY OF THE INVENTION

Certain of the foregoing and related objects are readily-attained according to the present invention by the provision of a novel portable communicating apparatus or hot link communicator which serves to address the diverse requirements of communication between parents and children, between supervising adults and mentally less-able individuals, and between elderly persons and caring relatives.

The hot link communicator preferably comprises a basic mobile telephone circuit having no key pad or display and a rechargeable battery and antenna and a preprogrammed identity module linking it to a single mobile or fixed telephone. Where appropriate, in an alternative embodiment the hot link communicator is able to place a call to one of a plurality of separate telephone numbers comprising mobile telephones, fixed telephones or other hot link communicators. In one embodiment in which the hot link communicator is able to select one of two numbers, an additional separate call button is provided for this purpose. In an alternative embodiment, selection of one of a plurality of numbers is done using the single call initiate button and by sequentially stepping through the numbers stored in the preprogrammed identity module. The indication of which number is being selected can be shown on the screen of the hot link communicator in a number of embodiments; alternatively one of a number of coloured lights may be programmed to light up to avoid the expense of the screen.

To all extents and purposes, the hot link communicator, works identically as a mobile telephone when it is active and receives a call. It differs from the complexity of a mobile telephone in that it comprises no key pad, and in its place, it comprises the circuitry to dial a number preprogrammed into its identity module.

The linked mobile telephone, or any mobile telephone comprising the same type of identity module, is thus easily employed to preprogram the unique number of any mobile or fixed telephone to which the hot link communicator is to be linked. This programming feature offers a significant degree in freedom in linking any particular hot link communicator with any particular mobile or fixed telephone. Furthermore, the same method may be employed to program two identity modules and thereby link two hot link communicators to each other.

Other objects and features of the present invention will become apparent from the following detailed description considered in connection with the accompanying drawings which disclose one embodiment of the invention. It is to be understood, however, that the drawings are designed for the purpose of illustration only and that the particular description of the portable hot link communicating apparatus is given by way of example only and does not limit the scope of the invention.

### BRIEF DESCRIPTION OF THE DRAWINGS

**FIG. 1** is an illustration of one embodiment of the portable hot link communicating apparatus.
**FIG. 2** is an illustration of the use of the hot link communicator within the context of the mobile telephone network.
**FIG. 3** is a circuit block schematic indicating the necessary functional components of the hot link communicating apparatus.
**FIG.4** comprises a schematic of a number of hot link mould shapes that may be used to maximise the acceptability of the product to children and adults.

### DESCRIPTION OF A PREFERRED EMBODIMENT

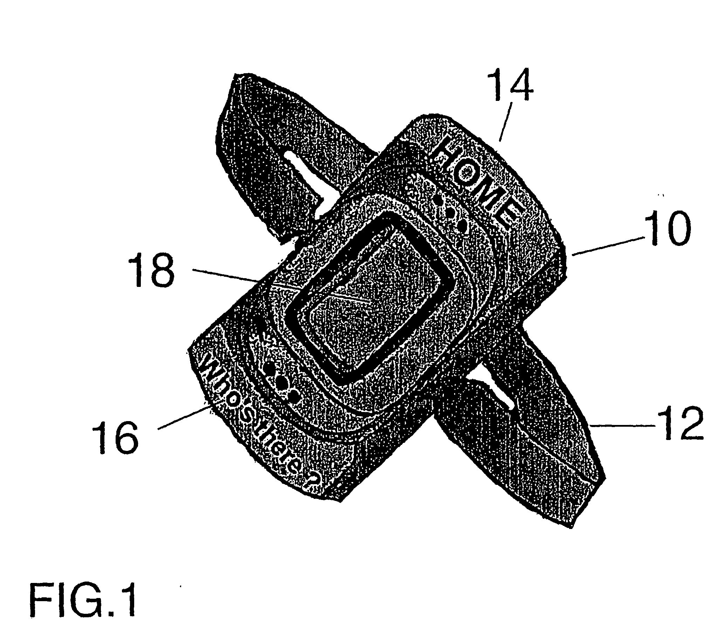

Referring now in detail to the drawings and in particular FIG. 1 thereof, therein illustrated is a portable hot link communicating apparatus embodying the present invention.

This device comprises a novel combination of existing technologies and features which make possible the existence of a new and improved portable hot link communicating apparatus to address the needs of parents wishing to have the facility of immediate communication with their children and vice versa, between supervising individuals and mentally less-able persons, and between elderly persons and caring relatives.

Furthermore this novel hot link communicator is able to receive and send calls to a preprogrammed mobile or fixed telephone by making use of simplified circuitry to select and call at least one number programmed into the identity module associated with the hot link communicator.

This unique combination of features greatly simplifies the hot link communicator circuitry and thereby reduces the cost of the device.

In a preferred embodiment, the invention is suitably employed within any specific mobile telephone system such as GSM, DCS, and CDMA. For the purpose of detailed description and in order to make clear the advantages and benefits of the hot link communicator, the particular embodiment of the GSM standard of mobile telephone technology is selected. Furthermore, the corresponding identity module within the GSM standard of mobile telephone technology, the subscriber identity module, or SIM card is described. This selection of GSM is made by way of example only and does not limit the scope of the invention to the GSM standard since it is obviously and suitably adapted to DCS and CDMA telephone technologies by making the corresponding and obvious technical modifications to the hot link communicator circuitry.

In the preferred embodiment, the essential hardware components comprise a basic GSM telephone circuit, a rechargeable battery, a compact GSM antenna, a brightly coloured moulding, in the instance that it is intended for children, a preprogrammed SIM card, and two buttons: one to initiate a telephone call, the other to answer an incoming call, and a ringing tone generator as well as a basic two way microphone device.

With particular reference to FIG. 1 there is shown an illustration of one embodiment of the portable hot link communicating apparatus. The hot link communicator 10 comprises a wrist strap 12, a call button 14, and a call receive button 16. The optional central display 18 may comprise a digital watch and possibly some indication of the coverage level, as is standard in the display of mobile telephones. In a further embodiment the display 18 may indicate who is calling, in the instance that this is preprogrammed into the identity module. Furthermore, in a further embodiment, the display 18 can be used to indicate to which one of a plurality of stored telephone numbers the hot link communicator can initiate a call, in which case a particular sequence of key presses can be programmed to step through the list of stored numbers.

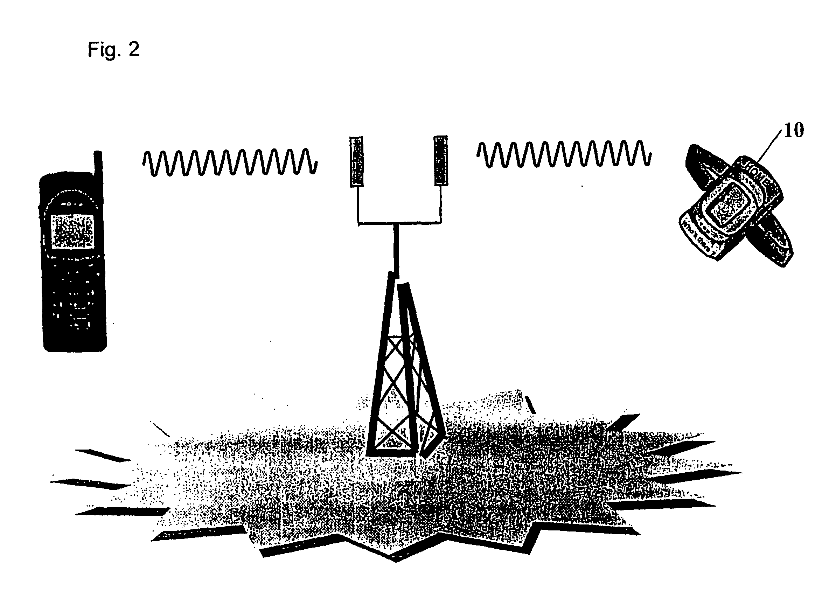

FIG. 2 shows an illustration of the ease of use of the hot link communicator within the context of mobile telephone technology.

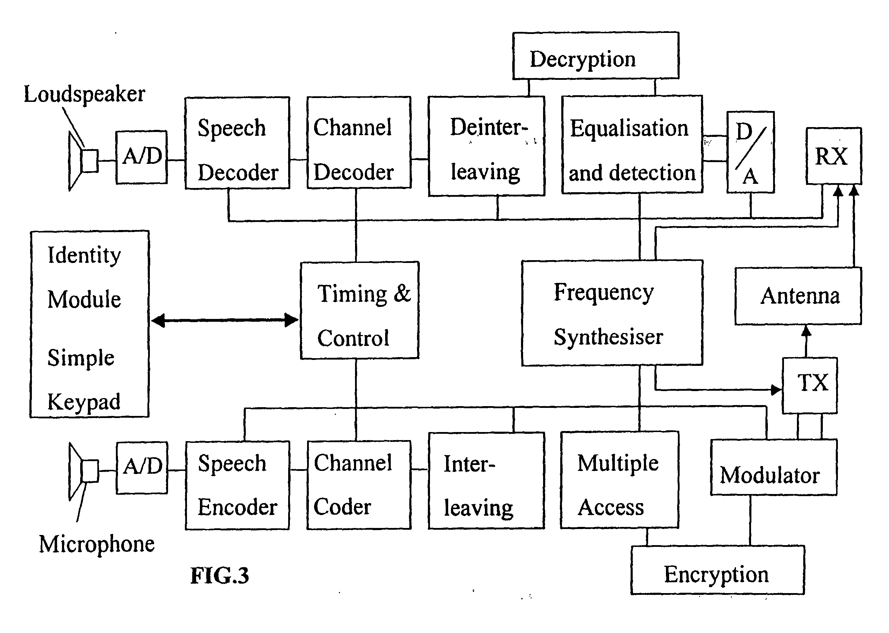

FIG. 3 shows a circuit block schematic indicating the necessary functional components of the hot link communicating apparatus according to one embodiment based on the standard schematic for GSM. The hot link communicator differs from the standard GSM telephone circuit in that the circuit has no keypad for entering numbers and in its place it makes use of a simplified button for automatically calling a number in the preprogrammed Identity Module.

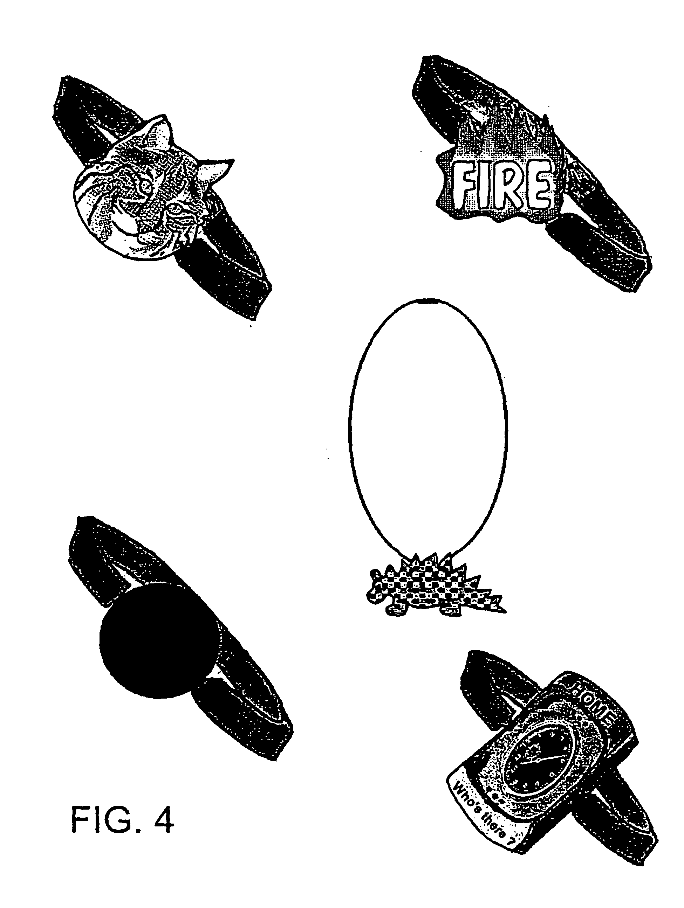

FIG.4 shows a number of possible shapes of the hot link communicator into which the plastic housing could be moulded to make the communicator most acceptable to children.

The hot link communicator is intended to provide an emergency telephone connection using the simplest combination of technologies in a new and unique way. It is intended that the hot link communicator may contain levels of sophistication to suit different specific needs of individuals. As has been stated before, the hot link communicator may comprise a screen display. In addition, the hot link communicator may comprise the capability to initiate telephone calls to one of a number of telephone numbers stored in the preprogrammed identity module. In GSM this preprogrammed identity module is described as the SIM card or Subscribers Identity Module. Nevertheless, the SIM card is only mentioned by way of example and the invention is not limited to this particular module and any circuitry may be devised to achieve the necessary functionality of the hot link communicator pre-programed identity module.

In one alternative embodiment, the hot link communicator is able to select one of a plurality of numbers stored in the preprogrammed identity module. This can be realised in a number of ways such as programming the call initiate button 14 to toggle through the list of stored numbers wherein each is sequentially displayed on the screen. Alternatively, a number of coloured lights may be used to indicate from whom a call is being received or to whom a call is about to be initiated wherein one particular coloured light corresponds to a particular telephone number stored on the preprogrammed identity module. The use of coloured lights may serve to be advantageous when the hot link communicator is to be used by a young child who is unable to recognised alphanumeric text on a screen display.

While only one embodiment of the present invention: the hot link communicator within the context of the digital GSM telephone system in particular, has been shown and described in detail, it will be obvious to those persons of ordinary skill in the art, that many changes and modifications may be made thereunto without departing from the invention. For example, the hot link communicator may make use of any telephone technology such as CDMA, and DCS. Furthermore the hot link communicator may be stored in a battery recharging device when not worn such that it remains available for use when needed.

## Claims

1. A portable hot link communicator (10) comprising a digital mobile telephone circuit, a rechargeable battery, a compact antenna, a ringing tone generator, a basic two-way microphone device for providing the facility of immediate communication or emergency telephone connection, a simplified array of press pads (14, 16), a programmable identity module comprising at least one unique subscriber telephone number wherein at least one button (14) of said simplified array of press pads automatically initiates a call of a unique subscriber telephone number from said pre-programmed identity module is **characterised in that**:
the portable hot link communicator (10) is adapted to be preprogrammed by any linked mobile telephone (fig.2) comprising the same type of identity module with said at least one unique subscriber telephone number in order to link said portable hot link communicator (10) to any particular mobile or fixed telephone.

2. A portable hot link communicator (10) according to claim 1 wherein said linked mobile phone pre-programming said programmable identity module of said hot link communicator (10) to be linked to another portable hot link communicator (10).

3. A portable hot link communicator (10) according to claim 1 or 2 for use in a mobile telephone system wherein said mobile telephone system being the Global System for Mobile telecommunication (GSM) or is a Code Division Multiple Access system (CDMA).

4. A portable hot link communicator (10) according to claim 1 or 2 wherein said programmable identity module is a Subscriber Identity Module (SIM).

5. A portable hot link communicator (10) according to claim 3 or 4 wherein said simplified array of press pads comprises only two buttons (14, 16),
a first button (14) to initiate a call of a pre-programmed number from said identity module comprising a unique subscriber telephone number and
a second button (16) to answer an incoming call.

6. A portable hot link communicator (10) according to claims 3-5 further **characterised in that** said portable hot link communicator (10) comprises a screen display (18).

7. A portable hot link communicator (10) according to claim 6 wherein said screen display (18) further comprises a digital watch and/or some indications of the coverage level.

8. A portable hot link communicator (10) according to claims 6 or 7 wherein a particular sequence of key presses are programmed to step in the list of said stored pre-programmed unique subscriber telephone numbers or
the call initiate button is programmed to toggle through the list of stored pre-programmed unique subscriber telephone numbers.

9. A portable hot link communicator (10) according to claim 8 comprising coloured lights.

10. A portable hot link communicator (10) according to claim 9 further comprising a brightly coloured moulding and/or a wrist strap or a neck strap or a belt clip.

11. A method for initiating a call from a portable hot link communicator (10) comprising a digital mobile telephone circuit, a rechargeable battery, a compact antenna, a ringing tone generator, a basic two-way microphone device for providing the facility of immediate communication or emergency telephone connection, a simplified array of press pads (14, 16) to initiate a pre-programmed unique subscriber telephone number and to answer an incoming call, a programmable identity module comprising at least one unique subscriber telephone number wherein at least one button (14) of said simplified array of press pads automatically initiates a call of a unique subscriber telephone number from said pre-programmed identity module, the method comprising the step of:
pre-programming said programmable identity module with said at least one unique subscriber telephone number by means of any linked mobile telephone (fig. 2) comprising the same type of identity module in order to link said portable hot link communicator (10) to any particular mobile or fixed telephone.

12. The method for initiating a call from a portable hot link communicator (10) in a telephone system according to claim 11 wherein said telephone system is GSM and said Programmable Identity Module is a Subscriber Identity Module (SIM).

13. The method for initiating a call from a portable hot link communicator (10) in a telephone system according to claim 11 or 12 wherein said programmable identification module is pre-programmed by a linked mobile phone comprising the same type of subscriber identification module (SIM).

14. The method for initiating a call from a portable hot link communicator (10) in a telephone system according to claim 13 further comprising the steps of:
selecting a button (14) from said simplified array of press pads,
pressing said selected button (14) in order to initiate a call of a unique pre-programmed number from said Programmable identity Module.

15. The method for initiating a call from a portable hot link communicator (10) in a telephone system according to claim 14 further comprising the steps of:
selecting a specific button (14) from said simplified array of press pads,
pressing said selected button (14) in order to display a stored pre-programmed unique subscriber telephone number on a screen display (18),
stepping in the list of said stored pre-programmed unique subscriber telephone numbers by repeatedly pressing said specific button,
selecting one of said numbers from said list,
maintaining pressed said button (14) or another button from said simplified array of press pad for a few seconds in order to initiate the call of said unique stored pre-programmed number from said Programmable Identity Module.

16. The method for initiating a call from a portable hot link communicator (10) in a telephone system according to claim 15 further comprising the steps of:
switching or flashing on a coloured light from at least one of a number of coloured lights corresponding to said unique telephone number.

17. A method for answering an incoming call at a portable hot link communicator (10) comprising a digital mobile telephone circuit, a rechargeable battery, a compact antenna, a ringing tone generator, a basic two-way microphone device for providing the facility of immediate communication or emergency telephone connection, a simplified array of press pads (14, 16) to initiate a pre-programmed unique subscriber telephone number and to answer an incoming call from a pre-programmed unique subscriber telephone number, a programmable identity module comprising at least one unique subscriber telephone number wherein at least one button (14) of said simplified array of press pads automatically initiates a call of a unique subscriber telephone number from said pre-programmed identity module, the method comprising the steps of:
pre-programming said programmable identity module with said at least one unique subscriber telephone number by means of any linked mobile telephone (fig. 2) comprising the same type of identity module in order to link said portable hot link communicator (10) to any particular mobile or fixed telephone.

18. The method for answering an incoming call at a portable hot link communicator (10) in a telephone system according to claim 17 wherein said telephone system is GSM and said Programmable Identity Module is a Subscriber Identity Module (SIM).

19. The method for answering an incoming call at a portable hot link communicator (10) according to claim 17 or 18 further comprising the steps of:
indicating that call is coming by the ringing tone generator of said portable hot link communicator (10),
pressing a specific button (16) from said simplified array of press pads,
communicating through said two-way microphone device.

20. The method for answering an incoming call at a portable hot link communicator (10) according to claim 19 wherein the step of indicating a call includes:
switching or flashing on a coloured light from at least one of a number of coloured lights corresponding to said received telephone call.

21. The method for answering an incoming call at a portable hot link communicator (10) according to claim 19 or 20 further comprising the step of:
displaying which one of a plurality of said stored pre-programmed unique subscriber telephone numbers is calling on a screen display (18).

## Patentansprüche

1. Tragbare Heißverbindungskommunikationseinrichtung (10), umfassend eine digitale Mobiltelefonschaltung, eine wiederaufladbare Batterie, eine Kompaktantenne, einen Klingeltongenerator, eine Zweiwegmikrofongrundvorrichtung zum Bereitstellen der Möglichkeit einer verzögerungsfreien Kommunikation oder Notrufverbindung, eine vereinfachte Drucktastenanordnung (14, 16), ein programmierbares Identifizierungsmodul, das wenigstens eine eindeutige Teilnehmertelefonnummer umfasst, wobei wenigstens ein Knopf (14) der genannten vereinfachten Drucktastenanordnung automatisch einen Anruf einer eindeutigen Teilnehmertelefonnummer von dem genannten vorprogrammierten Identifizierungsmodul aus einleitet, **dadurch gekennzeichnet, dass**:
die tragbare Heißverbindungskommunikationseinrichtung (10) zum Voreinprogrammieren der genannten wenigstens einen eindeutigen Teilnehmertelefonnummer mit einem beliebigen angeschlossenen Mobiltelefon (Fig. 2), das den gleichen Identifizierungsmodultyp umfasst, ausgeführt ist, um die genannte tragbare Heißverbindungskommunikationseinrichtung (10) mit einem beliebigen Mobil- oder Festnetztelefon zu verbinden.

2. Tragbare Heißverbindungskommunikationseinrichtung (10) nach Anspruch 1, bei der das genannte angeschlossene Mobiltelefon das genannte programmierbare Identifizierungsmodul der genannten Heißverbindungskommunikationseinrichtung (10) vorprogrammiert, die mit einer weiteren tragbaren Heißverbindungskommunikationseinrichtung (10) zu verbinden ist.

3. Tragbare Heißverbindungskommunikationseinrichtung (10) nach Anspruch 1 oder 2 zur Verwendung in einem Mobiltelefonsystem, bei der das genannte Mobiltelefonsystem das Globale System für Mobiltelekommunikation (GSM) oder ein System nach dem Verfahren Code Division Multiple Access (CDMA) ist.

4. Tragbare Heißverbindungskommunikationseinrichtung (10) nach Anspruch 1 oder 2, bei der das genannte programmierbare Identifizierungsmodul eine SIM-Karte (Subscriber Identity Module) ist.

5. Tragbare Heißverbindungskommunikationseinrichtung (10) nach Anspruch 3 oder 4, bei der die genannte vereinfachte Drucktastenanordnung nur zwei Knöpfe (14, 16) umfasst,
einen ersten Knopf (14) zum Einleiten eines Anrufs einer voreinprogrammierten Nummer von dem genannten Identifizierungsmodul aus, die eine eindeutige Teilnehmertelefonnummer umfasst, und
einen zweiten Knopf (16) zum Beantworten eines ankommenden Anrufs.

6. Tragbare Heißverbindungskommunikationseinrichtung (10) nach Anspruch 3 bis 5, ferner **dadurch gekennzeichnet, dass** die genannte tragbare Heißverbindungskommunikationseinrichtung (10) eine Bildschirmanzeige (18) umfasst.

7. Tragbare Heißverbindungskommunikationseinrichtung (10) nach Anspruch 6, bei der die genannte Bildschirmanzeige (18) ferner eine Digitaluhr und/oder einige Anzeigen des Versorgungsgrads umfasst.

8. Tragbare Heißverbindungskommunikationseinrichtung (10) nach Anspruch 6 oder 7, bei der eine spezielle Tastenbetätigungssequenz zum Weiterrücken in der Liste der genannten gespeicherten voreinprogrammierten eindeutigen Teilnehmertelefonnummern programmiert ist oder
der Rufeinleitungsknopf zum Schalten durch die Liste gespeicherter voreinprogrammierter eindeutiger Teilnehmertelefonnummern programmiert ist.

9. Tragbare Heißverbindungskommunikationseinrichtung (10) nach Anspruch 8, umfassend farbige Leuchten.

10. Tragbare Heißverbindungskommunikationseinrichtung (10) nach Anspruch 9, die ferner ein farbenfrohes Formteil und/oder ein Armband oder ein Umhängeband oder einen Gürtelclips. umfasst.

11. Verfahren zum Einleiten eines Anrufs von einer Heißverbindungskommunikationseinrichtung (10) aus, umfassend eine digitale Mobiltelefonschaltung, eine wiederaufladbare Batterie, eine Kompaktantenne, einen Klingeltongenerator, eine Zweiwegmikrofongrundvorrichtung zum Bereitstellen der Möglichkeit einer verzögerungsfreien Kommunikation oder Notrufverbindung, eine vereinfachte Drucktastenanordnung (14, 16) zum Einleiten einer voreinprogrammierten eindeutigen Teilnehmertelefonnummer und zum Beantworten eines ankommenden Anrufs, ein programmierbares Identifizierungsmodul, das wenigstens eine eindeutige Teilnehmertelefonnummer umfasst, wobei wenigstens ein Knopf (14) der genannten vereinfachten Drucktastenanordnung automatisch einen Anruf einer eindeutigen Teilnehmertelefonnummer von dem genannten vorprogrammierten Identifizierungsmodul aus einleitet, wobei das Verfahren den folgenden Schritt umfasst:
Voreinprogrammieren der genannten wenigstens einen eindeutigen Teilnehmertelefonnummer in das genannte programmierbare Identifizierungsmodul mithilfe eines beliebigen angeschlossenen Mobiltelefons (Fig. 2), das den gleichen Typ von Identifizierungsmodul umfasst, um die genannte tragbare Heißverbindungskommunikationseinrichtung (10) mit einem bestimmten Mobil- oder Festnetztelefon zu verbinden.

12. Verfahren zum Einleiten eines Anrufs von einer tragbaren Heißverbindungskommunikationseinrichtung (10) in einem Telefonsystem aus nach Anspruch 11, bei dem das genannte Mobiltelefonsystem GSM und das genannte programmierbare Identifizierungsmodul eine SIM-Karte (Subscriber Identity Module) ist.

13. Verfahren zum Einleiten eines Anrufs von einer tragbaren Heißverbindungskommunikationseinrichtung (10) in einem Telefonsystem aus nach Anspruch 11 oder 12, bei dem das genannte programmierbare Identifizierungsmodul mit einem angeschlossenen Mobiltelefon vorprogrammiert wird, das den gleichen Typ von SIM-Karte (Subscriber Identity Module) umfasst.

14. Verfahren zum Einleiten eines Anrufs von einer tragbaren Heißverbindungskommunikationseinrichtung (10) in einem Telefonsystem aus nach Anspruch 13, das ferner die folgenden Schritte umfasst:
Auswählen eines Knopfes (14) aus der genannten vereinfachten Drucktastenanordnung,
Drücken des genannten ausgewählten Knopfes (14), um einen Anruf einer eindeutigen voreinprogrammierten Nummer von dem programmierbaren Identifizierungsmodul aus einzuleiten.

15. Verfahren zum Einleiten eines Anrufs von einer tragbaren Heißverbindungskommunikationseinrichtung (10) in einem Telefonsystem aus nach Anspruch 14, das ferner die folgenden Schritte umfasst:
Auswählen eines spezifischen Knopfes (14) aus der genannten vereinfachten Drucktastenanordnung,
Drücken des genannten ausgewählten Knopfes (14), um eine gespeicherte voreinprogrammierte eindeutige Teilnehmertelefonnummer auf einer Bildschirmanzeige (18) anzuzeigen,
Weiterrücken in der Liste der genannten gespeicherten voreinprogrammierten eindeutigen Teilnehmertelefonnummern durch wiederholtes Drücken des genannten spezifischen Knopfes,
Auswählen einer der genannten Nummern aus der genannten Liste,
Gedrückthalten des genannten Knopfes (14) oder eines anderen Knopfes aus der genannten vereinfachten Drucktastenanordnung für einige Sekunden, um den Anruf der genannten eindeutigen gespeicherten voreinprogrammierten Nummer von dem genannten programmierbaren Identifizierungsmodul aus einzuleiten.

16. Verfahren zum Einleiten eines Anrufs von einer tragbaren Heißverbindungskommunikationseinrichtung (10) in einem Telefonsystem aus nach Anspruch 15, das ferner die folgenden Schritte umfasst:
Einschalten oder Blinken einer farbigen Leuchte von wenigstens einer von einer Anzahl von farbigen Leuchten entsprechend der genannten eindeutigen Telefonnummer.

17. Verfahren zum Beantworten eines ankommenden Anrufs an einer tragbaren Heißverbindungskommunikationseinrichtung (10), umfassend eine digitale Mobiltelefonschaltung, eine wiederaufladbare Batterie, eine Kompaktantenne, einen Klingeltongenerator, eine Zweiwegmikrofongrundvorrichtung zum Bereitstellen der Möglichkeit einer verzögerungsfreien Kommunikation oder Notrufverbindung, eine vereinfachte Drucktastenanordnung (14, 16) zum Einleiten einer voreinprogrammierten eindeutigen Teilnehmertelefonnummer und zum Beantworten eines ankommenden Anrufs von einer voreinprogrammierten eindeutigen Teilnehmertelefonnummer, ein programmierbares Identifizierungsmodul, das wenigstens eine eindeutige Teilnehmertelefonnummer umfasst, wobei wenigstens ein Knopf (14) der genannten vereinfachten Drucktastenanordnung automatisch einen Anruf einer eindeutigen Teilnehmertelefonnummer von dem genannten vorprogrammierten Identifizierungsmodul aus einleitet, wobei das Verfahren die folgenden Schritte umfasst:
Voreinprogrammieren der genannten wenigstens einen eindeutigen Teilnehmertelefonnummer in das genannte programmierbare Identifizierungsmodul mithilfe eines beliebigen angeschlossenen Mobiltelefons (Fig. 2), das den gleichen Typ von Identifizierungsmodul umfasst, um die genannte tragbare Heißverbindungskommunikationseinrichtung (10) mit einem bestimmten Mobil- oder Festnetztelefon zu verbinden.

18. Verfahren zum Beantworten eines ankommenden Anrufs an einer tragbaren Heißverbindungskommunikationseinrichtung (10) in einem Telefonsystem nach Anspruch 17, wobei das genannte Telefonsystem GSM und das genannte programmierbare Identifizierungsmodul eine SIM-Karte (Subscriber Identity Module) ist.

19. Verfahren zum Beantworten eines ankommenden Anrufs an einer tragbaren Heißverbindungskommunikationseinrichtung (10) nach Anspruch 17 oder 18, das ferner die folgenden Schritte umfasst:
Anzeigen durch den Klingeltongenerator der genannten tragbaren Heißverbindungskommunikationseinrichtung (10), dass ein Anruf ankommt,
Drücken eines spezifischen Knopfes (16) aus der genannten vereinfachten Drucktastenanordnung,
Kommunizieren durch die genannte Zweiwegmikrofonvorrichtung.

20. Verfahren zum Beantworten eines ankommenden Anrufs an einer tragbaren Heißverbindungskommunikationseinrichtung (10) nach Anspruch 19, bei dem der Schritt des Anzeigens eines Anrufs Folgendes aufweist:
Einschalten oder Blinken einer farbigen Leuchte von wenigstens einer von einer Anzahl von farbigen Leuchten entsprechend der genannten eindeutigen Telefonnummer.

21. Verfahren zum Beantworten eines ankommenden Anrufs an einer tragbaren Heißverbindungskommunikationseinrichtung (10) nach Anspruch 19 oder 20, das ferner den folgenden Schritt umfasst:
Anzeigen auf einer Bildschirmanzeige (18), welche einer Mehrzahl der genannten gespeicherten voreinprogrammierten eindeutigen Teilnehmertelefonnummern anruft.

## Revendications

1. Dispositif de communication portable à liaison directe (10) comprenant un circuit de téléphonie mobile numérique, une batterie rechargeable, une antenne compacte, un générateur de tonalité d'appel, un dispositif de microphone bidirectionnel élémentaire pour permettre une communication immédiate ou une connexion téléphonique d'urgence, un pavé simplifié de boutons-poussoirs (14, 16), un module d'identité programmable comprenant au moins un numéro de téléphone d'abonné unique, dans lequel au moins un bouton (14) dudit pavé simplifié de boutons-poussoirs lance automatiquement un appel d'un numéro de téléphone d'abonné unique à partir dudit module d'identité préprogrammé et **caractérisé en ce que** :
le dispositif de communication portable à liaison directe (10) est adapté pour être préprogrammé par n'importe quel téléphone mobile relié (figure 2) comprenant le même type de module d'identité avec ledit au moins un numéro de téléphone d'abonné unique afin de relier ledit dispositif de communication portable à liaison directe (10) à n'importe quel téléphone mobile ou fixe particulier.

2. Dispositif de communication portable à liaison directe (10) selon la revendication 1, dans lequel ledit téléphone mobile relié préprogramme ledit module d'identité programmable dudit dispositif de communication à liaison directe (10) pour le relier à un autre dispositif de communication portable à liaison directe (10).

3. Dispositif de communication portable à liaison directe (10) selon la revendication 1 ou 2 destiné à être utilisé dans un système de téléphonie mobile dans lequel ledit système de téléphonie mobile est un système GSM (Groupe spécial mobile) ou AMRT (à Accès multiple par différence de code).

4. Dispositif de communication portable à liaison directe (10) selon la revendication 1 ou 2, dans lequel ledit module d'identité programmable est un Module d'Identité d'Abonné (SIM).

5. Dispositif de communication portable à liaison directe (10) selon la revendication 3 ou 4, dans lequel ledit pavé simplifié de boutons-poussoirs ne comprend que deux boutons (14, 16),
un premier bouton (14) pour lancer un appel d'un numéro préprogrammé depuis ledit module d'identité comprenant un numéro de téléphone d'abonné unique et
un deuxième bouton (16) pour répondre à un appel entrant.

6. Dispositif de communication portable à liaison directe (10) selon les revendications 3 à 5, **caractérisé en outre en ce que** ledit dispositif de communication portable à liaison directe (10) comprend un écran d'affichage (18).

7. Dispositif de communication portable à liaison directe (10) selon la revendication 6, dans lequel ledit écran d'affichage (18) comprend en outre une montre numérique et/ou certaines indications de niveau de couverture.

8. Dispositif de communication portable à liaison directe (10) selon la revendication 6 ou 7, dans lequel une séquence particulière de pressions de boutons est programmée pour faire défiler la liste de numéros d'appel d'abonnés uniques préprogrammés mémorisés ou
le bouton de lancement d'appel est programmé pour parcourir la liste de numéros d'appel d'abonnés uniques préprogrammés mémorisés.

9. Dispositif de communication portable à liaison directe (10) selon la revendication 8, comprenant des témoins de couleur.

10. Dispositif de communication portable à liaison directe (10) selon la revendication 9, comprenant en outre un moulage de couleur vive et/ou une dragonne ou une sangle ou un crochet de fixation à la ceinture.

11. Procédé de lancement d'un appel depuis un dispositif de communication portable à liaison directe (10) comprenant un circuit de téléphonie mobile numérique, une batterie rechargeable, une antenne compacte, un générateur de tonalité d'appel, un dispositif de microphone bidirectionnel élémentaire pour permettre une communication immédiate ou une connexion téléphonique d'urgence, un pavé simplifié de boutons-poussoirs (14, 16) pour lancer un numéro de téléphone d'abonné unique préprogrammé et répondre à un appel entrant, un module d'identité programmable comprenant au moins un numéro de téléphone d'abonné unique, dans lequel au moins un bouton (14) dudit pavé simplifié de boutons-poussoirs lance automatiquement un appel d'un numéro de téléphone d'abonné unique à partir dudit module d'identité préprogrammé, le procédé comprenant l'étape de :
préprogrammation dudit module d'identité programmable avec ledit au moins un numéro de téléphone d'abonné unique au moyen de n'importe quel téléphone mobile relié (figure 2) comprenant le même type de module d'identité afin de relier ledit dispositif de communication portable à liaison directe (10) à n'importe quel téléphone mobile ou fixe particulier.

12. Procédé de lancement d'un appel depuis un dispositif de communication portable à liaison directe (10) dans un système téléphonique selon la revendication 11, dans lequel ledit système téléphonique est un système GSM et ledit Module d'Identité programmable est un Module d'Identité d'Abonné (SIM).

13. Procédé de lancement d'un appel depuis un dispositif de communication portable à liaison directe (10) dans un système téléphonique selon la revendication 11 ou 12, dans lequel ledit module d'identification programmable est préprogrammé par un téléphone mobile relié comprenant le même type de module d'identification d'abonné (SIM).

14. Procédé de lancement d'un appel depuis un dispositif de communication portable à liaison directe (10) dans un système téléphonique selon la revendication 13, comprenant en outre les étapes de :
sélection d'un bouton (14) sur ledit pavé simplifié de boutons-poussoirs,
pression dudit bouton sélectionné (14) afin de lancer un appel d'un numéro préprogrammé unique à partir dudit Module d'Identité programmable.

15. Procédé de lancement d'un appel depuis un dispositif de communication portable à liaison directe (10) dans un système téléphonique selon la revendication 14, comprenant en outre les étapes de :
sélection d'un bouton spécifique (14) sur ledit pavé simplifié de boutons-poussoirs,
pression dudit bouton sélectionné (14) afin d'afficher un numéro de téléphone d'abonné unique préprogrammé sur un écran d'affichage (18),
défilement de la liste desdits numéros d'appel d'abonné uniques préprogrammés mémorisés en appuyant de façon répétée sur ledit bouton spécifique,
sélection de l'un desdits numéros sur la liste,
maintien en position pressée dudit bouton (14) ou d'un autre bouton dudit pavé simplifié de boutons-poussoirs pendant quelques secondes afin de lancer l'appel dudit numéro préprogrammé mémorisé unique à partir dudit Module d'Identité programmable.

16. Procédé de lancement d'un appel depuis un dispositif de communication portable à liaison directe (10) dans un système téléphonique selon la revendication 15, comprenant en outre les étapes de :
commutation ou clignotement d'une lumière colorée d'au moins l'un d'un certain nombre de témoins colorés correspondant audit numéro téléphonique unique.

17. Procédé de réponse à un appel entrant au niveau d'un dispositif de communication portable à liaison directe (10) comprenant un circuit de téléphonie mobile numérique, une batterie rechargeable, une antenne compacte, un générateur de tonalité d'appel, un dispositif de microphone bidirectionnel élémentaire pour permettre une communication immédiate ou une connexion téléphonique d'urgence, un pavé simplifié de boutons-poussoirs (14, 16) pour lancer un numéro de téléphone d'abonné unique préprogrammé et répondre à un appel entrant depuis un numéro de téléphone d'abonné unique préprogrammé, un module d'identité programmable comprenant au moins un numéro de téléphone d'abonné unique, dans lequel au moins un bouton (14) dudit pavé simplifié de boutons-poussoirs lance automatiquement un appel d'un numéro de téléphone d'abonné unique à partir dudit module d'identité préprogrammé, le procédé comprenant les étapes de :
préprogrammation dudit module d'identité programmable avec ledit au moins un numéro de téléphone d'abonné unique au moyen de n'importe quel téléphone mobile relié (figure 2) comprenant le même type de module d'identité afin de relier ledit dispositif de communication portable à liaison directe (10) à n'importe quel téléphone mobile ou fixe particulier.

18. Procédé de réponse à un appel entrant au niveau d'un dispositif de communication portable à liaison directe (10) dans un système téléphonique selon la revendication 17, dans lequel ledit système téléphonique est un système GSM et ledit Module d'Identité programmable est un Module d'Identité d'Abonné (SIM).

19. Procédé de réponse à un appel entrant au niveau d'un dispositif de communication portable à liaison directe (10) selon la revendication 17 ou 18, comprenant en outre les étapes de :
signalisation qu'un appel arrive par le générateur de tonalité d'appel dudit dispositif de communication portable à liaison directe (10),
pression d'un appel spécifique (16) sur le pavé simplifié de boutons-poussoirs,
communication par ledit dispositif de microphone bidirectionnel.

20. Procédé de réponse à un appel entrant au niveau d'un dispositif de communication portable à liaison directe (10) selon la revendication 19, dans lequel l'étape de signalisation d'un appel comporte :
la commutation ou le clignotement d'une lumière colorée d'au moins l'un d'un certain nombre de témoins colorés correspondant audit numéro téléphonique reçu.

21. Procédé de réponse à un appel entrant au niveau d'un dispositif de communication portable à liaison directe (10) selon la revendication 19 ou 20, comprenant en outre l'étape :
d'affichage sur un écran d'affichage (18) du numéro appelant parmi une pluralité desdits numéros d'appel d'abonnés uniques préprogrammés mémorisés.
